# EUROPEAN PATENT SPECIFICATION

(11) **EP 4 109 277 B1**
(45) Date of publication and mention of the grant of the patent: **27.08.2025**
(21) Application number: 22162311.9
(22) Date of filing: 15.03.2022
(51) Int. Cl.: G06F 11/3668, G06F 11/3698

(54) **A SYSTEM AND METHOD FOR STABILITY TESTING OF INFOTAINTMENT UNIT**
SYSTEM UND VERFAHREN ZUR STABILITÄTSPRÜFUNG EINER INFOTAINMENT-EINHEIT
SYSTÈME ET PROCÉDÉ DE TEST DE STABILITÉ D'UNE UNITÉ D'INFODIVERTISSEMENT

(30) Priority: 24.06.2021 IN 202141028455
(43) Date of publication of application: 28.12.2022
(73) Proprietor: L & T Technology Services Limited, Chennai 600089 (IN)
(72) Inventor: Motwani, Ashish, 400705 Navi Mumbai (IN); Gawde, Neha Vidhyadhar, 400605 Thane (IN)
(74) Representative: Studio Torta S.p.A.

(56) References cited:
- CN-A- 110 837 476
- US-A1- 2006 129 992
- US-A1- 2014 245 070
- US-A1- 2019 163 617
- US-A1- 2021 011 828

## Description

### TECHNICAL FIELD

The present invention generally relates to the field of infotainment unit testing and more particularly to testing stability of the infotainment unit under various test environments.

### BACKGROUND

The following description includes information that may be useful in understanding the present invention. It is not an admission that any of the information provided herein is prior art or relevant to the presently claimed invention, or that any publication specifically or implicitly referenced is prior art.

Infotainment units are very commonly used in vehicles and generally referred to as In-vehicle Infotainment (IVI) units. An IVI unit comprises a collection of hardware and software components that provide audio or video entertainment along with various other features. Further, driven by the demand for more connected vehicles, IVI units are becoming sophisticated in terms of their functionalities.

Because of high demand of sophisticated IVI units, it is highly essential that the IVI units undergo rigorous testing before they are rolled out in the market. In particular, since an IVI unit comprise one or more functional components that work in conjunction with one another to execute multiple functionalities, it is highly important to perform both functional and non-functional testing on each of the components. This helps to unearth performance and stability issues that may arise while the components are being executed in live scenarios, such as when the vehicle is in an operating state.

Document US 2006/129992 A1 generally relates to computers and, more particularly, it relates to a software test and performance monitoring system for software applications.

### SUMMARY

The invention is set out by the subject-matter of the independent claims.

Various example embodiments described herein relate to a method of testing an infotainment unit of a vehicle. The method includes receiving a plurality of input requests from a second computing device to test one or more functional components of the infotainment unit and receiving a set of conditions associated with the plurality of input requests from a repository of the first computing device. The method further includes generating a stability testing framework comprising one or more interfaces selectively invoked based on the plurality of input requests and the set of conditions. The method further includes performing a stability testing to test the one or more functional components of the infotainment unit based on the stability testing framework, wherein the stability testing framework comprises a cross-domain testing platform, a stress testing platform, and an aging testing platform. In the cross-domain testing platform, the method includes executing a first set of test cases to test an interaction between the one or more functional components for a first predefined time-period. In the stress testing platform, the method includes executing a second set of test cases to test the one or more functional components under a maximum load capacity for the first predefined time-period, wherein the maximum load capacity is indicative of a simulated load on the one or more functional components considering the vehicle in an operating state. In the aging testing platform, the method includes selectively executing at least one of the first set of test cases and the second set of test cases to test the one or more functional components for a second predefined time-period. Further, the method includes generating a plurality of reports indicating a status of the one or more functional components during the stability testing.

Various example embodiments described herein relate to a method of testing an infotainment unit of a vehicle, wherein the one or more functional components comprises at least one of Head-Unit; Heads-Up Display; Operating Systems; Bus communication protocols such as media oriented systems transport (MOST), controller area network (CAN), local interconnect network (LIN), Flexray, Ethernet and other communication protocols; Connectivity Modules such as Bluetooth, Wi-Fi and other wireless communications; Instrument Clusters such as analog and digital gauges; steering wheel controls; and other types of embedded Electronic Control Unit (ECU), or their combination.

Various example embodiments described herein relate to a method of testing an infotainment unit of a vehicle, wherein the one or more interfaces comprises a Tool Access interface, a Domain Scripts Access interface, a Network Loading interface, an Input/output (I/O) Loading interface, and a Connectivity interface.

Various example embodiments described herein relate to a method of testing an infotainment unit of a vehicle, wherein executing the first set of test cases to test the interaction further comprises: invoking at least one of the Tool Access interface and a Domain Scripts Access interface.

Various example embodiments described herein relate to a method of testing an infotainment unit of a vehicle, wherein executing the second set of test cases to test the maximum load capacity further comprises: invoking at least one of the Network Loading interface, the Input/output (I/O) Loading interface, and the Connectivity interface.

Various example embodiments described herein relate to a method of testing an infotainment unit of a vehicle, wherein the first predefined time-period is shorter than the second predefined time-period.

Various example embodiments described herein relate to a method of testing an infotainment unit of a vehicle, wherein generating the plurality of reports further includes: dynamically updating a database with a plurality of defects encountered during the stability testing; and dynamically updating the stability testing framework based on the plurality of defects.

Various example embodiments described herein relate to a method of testing an infotainment unit of a vehicle, wherein the set of conditions comprises a domain script condition and a tool access condition, wherein each of the conditions include associated reference variables such as reference recordings, images, messages, text, provision files and the like.

Various example embodiments described herein relate to a method of testing an infotainment unit of a vehicle, wherein the first set of test cases comprises at least one of HMI test, connectivity test, speech test, navigation test, other cross domain tests and their combination, and wherein the second set of test cases comprises at least one of vehicle speed test, vehicle processing unit utilization test, networking test, other load capacity tests and their combination.

Various example embodiments described herein relate to a system for testing an infotainment unit of a vehicle. The system includes a processor, a memory and a display. The processor is communicably coupled to the memory, the display and an infotainment workstation. The processor is configured to receive at least one input request and at least one condition to test one or more functional components of the infotainment unit, wherein the one or more functional components are positioned at the infotainment workstation. The processor is further configured to generate a stability testing framework based on the at least one input requests and the at least one condition to test the one or more functional components of the infotainment unit, wherein the stability testing framework comprises a cross-domain testing platform and a stress testing platform. The processor is further configured to perform a stability testing to test the one or more functional components of the infotainment unit based on the stability testing framework. When performing the stability testing, invoke one or more user interfaces on the display for a first set of test cases and a second set of test cases, wherein the first set of test cases to test an interaction between the one or more functional components and the second set of test cases to test the one or more functional components under maximum load capacity for a first predefined time-period, wherein the maximum load capacity is indicative of a simulated load on the one or more functional components considering the vehicle in an operating state. The processor is further configured to generate a plurality of reports indicating a status of the one or more functional components during the stability testing.

Various example embodiments described herein relate to a system for testing an infotainment unit of a vehicle, wherein the processor is further configured to: simultaneously execute the first set of test cases and the second set of test cases during the stability testing.

Various example embodiments described herein relate to a system for testing an infotainment unit of a vehicle, wherein the one or more user interfaces comprises at least one of a Tool Access interface, a Domain Scripts Access interface, a Network Loading interface, an Input/output (I/O) Loading interface, and a Connectivity interface.

Various example embodiments described herein relate to a system for testing an infotainment unit of a vehicle, wherein the first set of test cases comprises at least one of HMI test, connectivity test, speech test, navigation test, other cross domain tests and their combination, and wherein the second set of test cases comprises at least one of vehicle speed test, vehicle processing unit utilization test, networking test, other load capacity tests and their combination.

Various example embodiments described herein relate to a system for testing an infotainment unit of a vehicle, wherein the one or more functional components comprises at least one of Head-Unit; Heads-Up Display; Operating Systems; Bus communication protocols such as media oriented systems transport (MOST), controller area network (CAN), local interconnect network (LIN), Flexray, Ethernet and other communication protocols; Connectivity Modules such as Bluetooth, Wi-Fi and other wireless communications; Instrument Clusters such as analog and digital gauges; steering wheel controls; and other types of embedded Electronic Control Unit (ECU), or their combination.

Various example embodiments described herein relate to a system for testing an infotainment unit of a vehicle, wherein the processor is further configured to: dynamically update a database and the with a plurality of defects encountered during the stability testing; and dynamically update the stability testing framework based on the plurality of defects.

The foregoing summary is illustrative only and is not intended to be in any way limiting. In addition to the illustrative aspects, embodiments, and features described above, further aspects, embodiments, and features will become apparent by reference to the drawings and the following detailed description.

### BRIEF DESCRIPTION OF DRAWINGS

The embodiments of the disclosure itself, as well as a preferred mode of use, further objectives and advantages thereof, will best be understood by reference to the following detailed description of an illustrative embodiment when read in conjunction with the accompanying drawings. One or more embodiments are now described, by way of example only, with reference to the accompanying drawings in which:
**FIG.1** illustrates a high-level architecture for testing an infotainment unit, in accordance with an embodiment of the present disclosure.
**FIG.2** illustrates a low-level architecture for testing the infotainment unit, in accordance with an embodiment of the present disclosure.
**FIGS. 3A-B** illustrates a flowchart of a method of testing the infotainment unit, in accordance with an embodiment of the present disclosure.
**FIG.4** illustrates a sequence flow of the stability testing, in accordance with an embodiment of the present disclosure.
**FIGS. 5A-F** illustrates examples of user interfaces for testing the infotainment unit, in accordance with an embodiment of the present disclosure.

The figures depict embodiments of the disclosure for purposes of illustration only. One skilled in the art will readily recognize from the following description that alternative embodiments of the structures and methods illustrated herein may be employed without departing from the principles of the disclosure described herein.

### DETAILED DESCRIPTION

The foregoing has broadly outlined the features and technical advantages of the present disclosure in order that the detailed description of the disclosure that follows may be better understood. It should be appreciated by those skilled in the art that the conception and specific embodiment disclosed may be readily utilized as a basis for modifying or designing other structures for carrying out the same purposes of the present disclosure.

Various embodiments of the present invention now will be described more fully hereinafter with reference to the accompanying drawings, in which some, but not all embodiments of the invention are shown. Indeed, the invention may be embodied in many different forms and should not be construed as limited to the embodiments set forth herein. Rather, these embodiments are provided so that this disclosure will satisfy applicable legal requirements. The term "or" is used herein in both the alternative and conjunctive sense, unless otherwise indicated. The terms "illustrative," "example," and "exemplary" are used to be examples with no indication of quality level. Like numbers refer to like elements throughout.

The phrases "in an embodiment," "in one embodiment," "according to one embodiment," and the like generally mean that the particular feature, structure, or characteristic following the phrase may be included in at least one embodiment of the present disclosure and may be included in more than one embodiment of the present disclosure (importantly, such phrases do not necessarily refer to the same embodiment).

The word "exemplary" is used herein to mean "serving as an example, instance, or illustration." Any implementation described herein as "exemplary" is not necessarily to be construed as preferred or advantageous over other implementations.

If the specification states a component or feature "can," "may," "could," "should," "would," "preferably," "possibly," "typically," "optionally," "for example," "often," or "might" (or other such language) be included or have a characteristic, that particular component or feature is not required to be included or to have the characteristic. Such component or feature may be optionally included in some embodiments, or it may be excluded.

Conventional IVI unit testing faces challenges due to absence of appropriate and sophisticated test platforms and lack of best fit test designs. In most cases, issues and defects are found when the IVI units are tested in the vehicle, which dents the reputation of the brand manufacturing the IVI units and disturbs the production schedule on calendar.

Also, another challenge faced while performing IVI unit testing is the low defect count achieved especially while performing automatic IVI testing. For example, some of the defects which the driver or the user of the vehicle may encounter during the live scenarios (i.e., when the vehicle is the operating state) may not be taken into account during the IVI unit testing which may result in the low defect count. Further, conventional IVI unit testing may test the IVI unit based on few standard scenarios. For example, the standard scenarios may be "launch a media and play", "launch a navigation and activate route guidance". Such standard scenarios fail to test the IVI unit to its boundary level capacity, which may result in lag or malfunction of the IVI unit during the live scenarios. For example, the boundary level capacity may be indicative of how well the IVI unit performs when a large volume of data is being processed under peak load conditions.

Furthermore, conventional IVI unit testing may test the one or more functional components of IVI unit individually in an isolated manner. Such a testing is called as a domain-based testing as generally known in the art in which the functionality of each functional component is tested in isolation. For example, assuming that the functional component being a Human Machine Interface (HMI), then test scripts for the domain "HMI" will be executed to test its functionality. For example, assuming that the functional component being a Bluetooth, then the test scripts for the domain "Bluetooth" will be executed to test its functionality. Likewise, other functionalities like "navigation" or "speech" may also be tested in a similar isolated manner. In this regard, when the driver or the user of the vehicle invokes multiple functional components at a particular instance, then the IVI unit may crash due to overload as the functional components were not tested under cross- domain scenarios.

There is, therefore, a need for a testing framework to test the stability of the IVI unit in initial stages of the development cycle where different preconditions can be triggered to check short-term and long-term IVI unit stability. At the same time, the IVI unit may be tested to its boundary level capacity considering the live scenarios to overcome malfunctions when the vehicle is in the operating state.

Disclosed herein is a system and a method for testing an infotainment unit. The system may test the one or more functional components of the infotainment unit in accordance with a stability testing framework. The system receives at least one input request and at least one condition to test one or more functional components of the infotainment unit (104), wherein the one or more functional components are positioned at the infotainment workstation. The system generates the stability testing framework based on the at least one input requests and the at least one condition to test the one or more functional components. The stability testing framework comprises a cross-domain testing platform and a stress testing platform. The system performs a stability testing to test the one or more functional components of the infotainment unit (104) based on the stability testing framework. When performing the stability testing in the cross-domain testing platform, the system invokes one or more user interfaces for a first set of test cases, wherein the first set of test cases to test an interaction between the one or more functional components. When performing the stability testing in the stress testing platform, the system invokes the one or more user interfaces for a second set of test cases to test the one or more functional components under maximum load capacity for a first predefined time-period, wherein the maximum load capacity is indicative of a simulated load on the one or more functional components considering the vehicle in an operating state. The system further generates a plurality of reports indicating a status of the one or more functional components during the stability testing. In this regard, the stability testing framework uses the cross-domain testing platform and the stress testing platform to test the one or more functional components of the infotainment unit.

Turning now to the drawings, the detailed description set forth below in connection with the appended drawings is intended as a description of various configurations and is not intended to represent the only configurations in which the concepts described herein may be practiced. The detailed description includes specific details for the purpose of providing a thorough understanding of various concepts with like numerals denote like components throughout the several views. However, it will be apparent to those skilled in the art that these concepts may be practiced without these specific details.

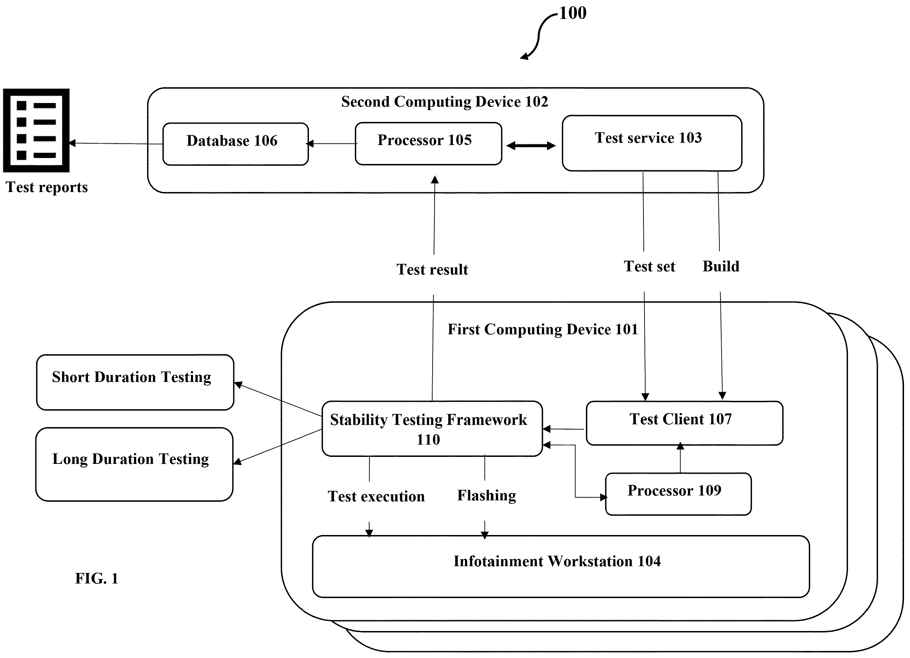

FIG. 1 illustrates a high-level architecture for testing an infotainment unit, in accordance with an embodiment of the present disclosure. It must be understood to a person skilled in art that architecture may also be implemented in various environments, other than as shown in FIG. 1.

According to an embodiment, the high-level architecture depicts a test environment 100 for testing an infotainment unit. The test environment 100 comprises a first computing device 101, a second computing device 102 and an infotainment workstation 104. According to an embodiment, the high-level architecture may be implemented as a client- server architecture with first computing device 101 as the client and the second computing device 102 as the server. The infotainment workstation 104 may be communicably coupled to the first computing device 101 and the second computing device 102. The infotainment workstation 104 includes the infotainment unit which is subjected to the testing. In some examples, the infotainment workstation 104 may be referred to as a test bench on which the infotainment unit is subjected to the testing. For example, the infotainment unit may include one or more functional components which are to be tested before the infotainment unit is deployed in a vehicle. The first computing device 101, the second computing device 102, and the infotainment workstation 104 are communicably coupled to each other using wired or wireless communication channels and/or Input/Output interfaces. In some examples, the I/O interface may include a variety of software and hardware interfaces, for example, a USB, Wi-Fi port, and the like. The I/O interface may enable the first computing device 101, the second computing device 102 and the infotainment workstation 104 to communicate with other computing devices, such as web servers and external data servers (not shown). The I/O interface may facilitate multiple communications within a wide variety of networks and protocol types, and wireless networks, such as WLAN, cellular, or satellite. The I/O interface may include one or more ports for connecting many devices to one another or to another server. According to an embodiment, the first computing device 101 may perform the testing on the one or more functional components of the infotainment unit after receiving testing requests from the second computing device 102.

According to an embodiment, the first computing device 101 and the second computing device 102 may include processor 105, 109 and a memory. By way of example but not limitation, the memory may include random access memory (RAM), read-only memory (ROM), electrically erasable programmable read-only memory (EEPROM), FLASH memory, disk storage, magnetic storage devices, or the like. Disk storage, as used herein, includes compact disc (CD), laser disc, optical disc, digital versatile disc (DVD), floppy disk, and Blu-ray Disc^{™}, or other storage devices that store data magnetically or optically with lasers. Combinations of the above types of media are also included within the scope of the terms non-transitory computer-readable and processor-readable media. Additionally, any combination of instructions stored on the one or more non-transitory processor-readable or computer-readable media may be referred to herein as a computer program product. In some examples, the processor 105, 109 may be implemented as one or more microprocessors, microcomputers, microcontrollers, digital signal processors, central processing units, state machines, logic circuitries, and/or any devices that manipulate signals based on operational instructions. Among other capabilities, the processor 105, 109 may be configured to fetch and execute computer-readable instructions stored in the memory.

According to an embodiment, the first computing device 101 may include a test client application 107 and the second computing device 102 may include a test service application 103. In some examples, the applications may exchange a plurality of information such as, but not limited to, a plurality of input requests, a plurality of test results, a plurality of configuration files, etc. According to an embodiment, the second computing device 102 includes a server database 106 to store the plurality of test results transferred from the first computing device 101. In some examples, the test results may be stored in the form of test reports in .xml, or .doc, or .xlsx file format.

According to an embodiment, the first computing device 101 includes a client database to store the plurality of test results. The test results are indicative of the output of the testing performed by on the infotainment unit by the first computing device 101. According to an embodiment, the test service application 103 of the second computing device 102 may query the test client application 107 to identify a configuration information of the first computing device 101. According to another embodiment, the test client application 107 may automatically broadcast the configuration information. In some examples, the configuration information may be exchanged when the first computing device 101 and the second computing device 102 establishes a connection via the communication channel. Such configuration information may be required by the test service 103 to identify if the first computing device 101 is capable of performing testing on a test set for a particular software build. In some examples, the test set includes set of functionalities associated with the one or more functional components of the infotainment unit required to be tested by the first computing device 101. In some examples, the software build may indicate a new build or an updated build of the infotainment unit which may be unique to each Original Equipment Manufacturers (OEM). In some examples, the software build may also be referred to as a test build which includes the test that would be run on each new build of the infotainment unit supplied by the OEM. In this regard, the test service 103 may receive the configuration files to verify if the test build is testable by the first computing device 101. The test client application 107 may receive the build and the test set after the configuration files of the first computing device 101 is verified. For example, each build may include a build name and a frequency of testing required for the build such a test hourly, test weekly, etc.

According to an embodiment, if the second computing device 102 identifies that the first computing device 101 is not capable of executing the test build, the second computing device 102 may initiate a flashing process by transferring an updated configuration file. The flashing process may be executed by the processor 109 of the first computing device 101 upon receiving the updated configuration file such that the first computing device 101 may be configured to run the test set.

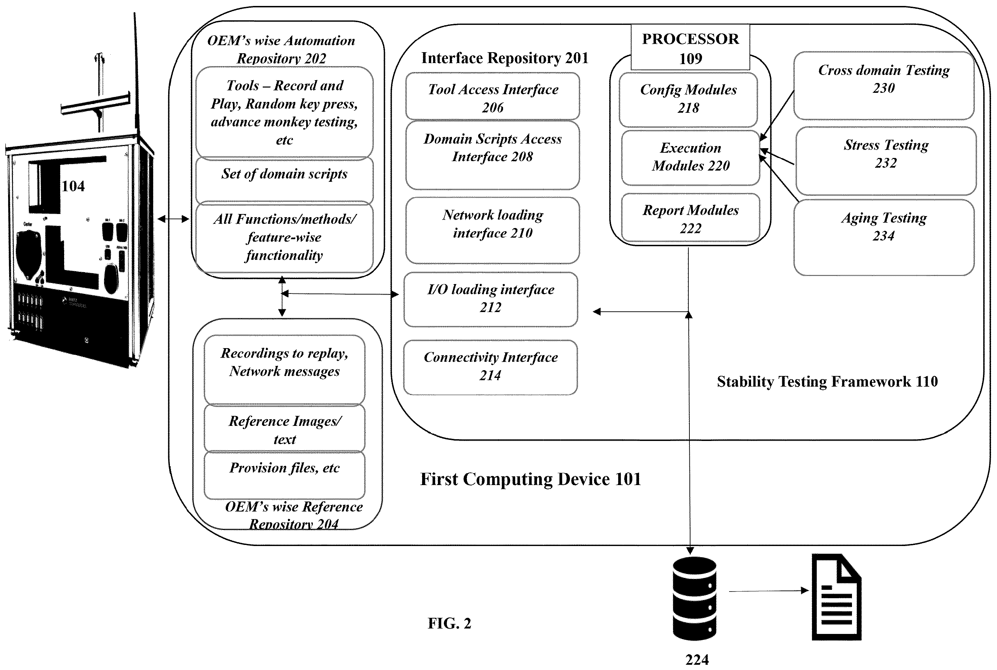

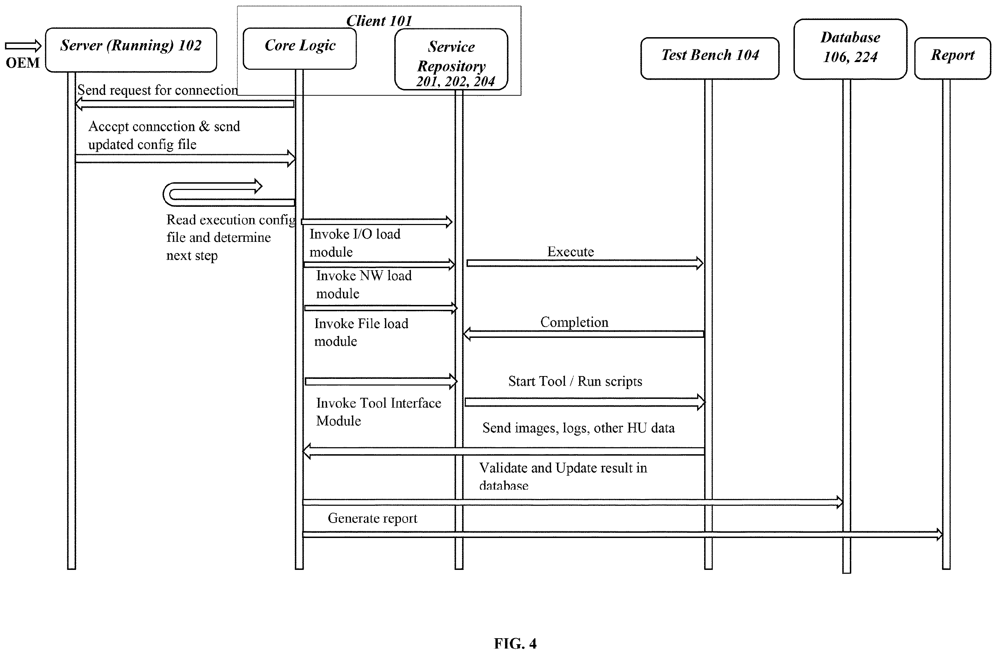

According to an embodiment, the test set may be executed by the processor 109 of the first computing device 101 based on a Stability Testing Framework 110. For example, the processor 109 may receive or access the test client application 107 to retrieve the test set and the build to execute the testing. According to an embodiment, the Stability Testing Framework 110 may be updated during the flashing process. According to an embodiment, the Stability Testing Framework 110 includes a short duration stability testing and a long duration stability testing. The processor 109 may execute either the short duration stability testing or the duration stability testing or a combination of both based on the test set and the build received from the second computing device 102 and specified by the OEM. The Stability Testing Framework 110 generated by the processor 109 to perform the stability testing on the infotainment unit will be explained in conjunction with FIG. 2. A sequence flow of information during the short duration stability testing will be explained in detailed in FIG. 4. Although the present disclosure is explained considering that the first computing device 101 as a client, it may be understood that the second computing device 102 may be implemented as a tool or in a variety of computing systems, such as a laptop computer, a desktop computer, a notebook, a workstation, a mainframe computer, server, network server, and a cloud-based computing environment.

Turning now to FIG. 2, illustrating the low-level architecture for testing the infotainment unit. The low-level architecture depicts a testing environment comprising the first computing device 101 and the infotainment workstation 104. As previously discussed, the first computing device 101 is communicably coupled to the infotainment workstation 104 via the communication channels. In some examples, the communication channels may be wireless such as Bluetooth or Wi-Fi or wired such as CAN bus or ethernet cables. In some examples, the first computing device 101 may test the one or more functional components of the infotainment by transmitting test signals to each functional component positioned on the infotainment workstation 104 using a unique IP address associated with each functional component. In some examples, the first computing device 101 utilizes the CAN-bus to transmit simulated test signals to the infotainment workstation 104.

According to an embodiment, the infotainment workstation 104 comprises plurality of hardware trigger buttons to test the functionalities of the one or more functional components attached to the workstation. In some examples, the one or more functional components includes, but not limited to, Head-Unit; Heads-Up Display; Operating Systems; Bus communication protocols such as media oriented systems transport (MOST), controller area network (CAN), local interconnect network (LIN), Flexray, Ethernet and other communication protocols; Connectivity Modules such as Bluetooth, Wi-Fi and other wireless communications; Instrument Clusters such as analog and digital gauges; steering wheel controls; and other types of embedded Electronic Control Unit (ECU). In some examples, the gauges include Speedometer, Tachometer, Fuel gauge, Oil pressure gauge, Odometer and Turn signal indicators. In some examples, the infotainment unit are composed of multiple ECUs connected through in-car network such as CAN or LIN. Different protocols can communicate with each other through gateway ECUs.

In some examples, the Head-Unit may be a touch screen based, tablet-like device, mounted on the vehicle's dashboard. The head unit may include a human machine interface (HMI) which may provide provisions to control other functionalities the infotainment unit and display information related to a functionality which is activated by a driver of the vehicle. For example, the Head-Unit may display a navigation map in response to the driver selecting a map functionality through touch via the HMI or voice command via a microphone. For example, the Head-Unit may display a station frequency of a radio station in response to the driver selecting a radio functionality through touch via the HMI or the voice command via the microphone. In some examples, the operating systems support connectivity, and other functions, and may integrate new functions in the infotainment unit. Operating systems like Android, Linux, Windows may be installed on the infotainment unit.

In some examples, the connectivity modules include GPS, Wi-Fi, and Bluetooth modules to provide connectivity with external networks and smartphones. In some examples, the vehicle may include proximity sensors, gesture recognition sensors, cameras and in-vehicle sensors which integrate with the infotainment unit. Some or all of the functionalities in the infotainment unit may be and controlled using the head unit, hardware buttons, steering wheel controls and voice/speech commands.

According to an embodiment, the first computing device 101 may be communicably coupled to an external database via the communication channels to store a plurality of test reports indicative of the results obtained during the stability testing. According to another embodiment, the first computing device 101 includes an internal database 224 to store plurality of test results accessed by the reporting module 222 to generate a plurality of test reports. According to an embodiment, the first computing device 101 may include a memory 200 comprising one or more repositories. The one or more repositories include an OEM's wise Automation Repository 202, an OEM's wise Reference Repository 204 and an Interface repository 201. According to an embodiment, the OEM's wise Automation Repository 202 and the OEM's wise Reference Repository 204 provides at least one condition for testing one or more functional components of the infotainment unit. The at least one condition may be associated with an input received from the second computing device 102. In some examples, the input may be the build with test set to be tested by the first computing device 101. In this regard, each build specified by the OEM may have an associated entry in the form of conditions and reference variables in the OEM's wise Automation Repository 202 and the OEM's wise Reference Repository 204.

According to an embodiment, the OEM's wise Automation Repository 202 may include a domain access condition or set of domain scripts and correspondingly the OEM's wise Reference Repository 204 may include associate reference variables such as reference text, images, and audio. For example, if the build specifies to test the functionality of a radio component in the infotainment unit, then the OEM's wise Automation Repository 202 may specify a condition that the radio component testing must include manual search function, auto search function, settings function, and save radio station function. Correspondingly, the OEM's wise Reference Repository 204 may specify an associated reference image required to be displayed while testing the radio component. In another example, if the build specifies to test the functionality of a navigation component in the infotainment unit, then the OEM's wise Automation Repository 202 may specify a condition that the navigation component testing must include direction, from location, to location, etc. Correspondingly, the OEM's wise Reference Repository 204 may specify an associated reference image to be displayed such as a map and a recording to be played such as an audio instruction while testing the navigation component. In another example, if the build specifies to test the functionality of a security component in the infotainment unit, then the OEM's wise Automation Repository 202 may specify a condition that the security component testing must include user ID, password, etc. Correspondingly, the OEM's wise Reference Repository 204 may specify an associated provision files including the login profiles unique to the driver.

According to another embodiment, the OEM's wise Automation Repository 202 may include tool access condition or tools such as "record and play" and correspondingly the OEM's wise Reference Repository 204 may include associate reference variables such as a replay recording. For example, the "record and play" allow the driver to press a radio button or a soft button in a touch interface to record an activity of the driver. The activity is logged and played back when required for the testing. The replay recordings for the "record and play tool" may be available at the OEM's wise Reference Repository 204. According to another embodiment, the OEM's wise Automation Repository 202 may include tools such as "random key press" and correspondingly the OEM's wise Reference Repository 204 may include associate reference variables such as coordinates of the touch point of the finger of the driver when performing the "random key press". According to another embodiment, OEM's wise Automation Repository 202 may include tools such as "advanced monkey test" and correspondingly the OEM's wise Reference Repository 204 may include associate reference variables such as random values to be populated when performing the monkey test.

According to an embodiment, the first computing device 101 may include the processor 109, the memory 200 and a display (not shown). The processor 109 is communicably coupled to the memory 200 and the display. The processor 109 may generate a Stability Testing Framework 110 based on at least one input requests and the at least one condition to test the one or more functional components of the infotainment unit. As previously discussed, the at least one input requests may be received by the processor 109 from the second computing device 102. For example, the test build and the test case. The at least one condition may be received by the processor 109 from the repository. The repository, for example, is the OEM's wise Automation Repository 202 or the OEM's wise Reference Repository 204 or both. According to an embodiment, the processor 109 may access the repository to retrieve one or more conditions associated with the input requests.

According to an embodiment, the processor 109 comprises a configuration module 218, an execution module 220, and a reporting module 222. As discussed previously in conjunction with FIG. 1, the configuration files may be accessed by the configuration module 218 and communicated to the second computing device 102. For example, the test server application may verify the configuration files to check whether the first computing device 101 is capable of performing the testing for the build or if there is a requirement for the flashing process. According to an embodiment, the processor 109 comprises the execution module 220 to perform a stability testing to test the one or more functional components of the infotainment unit based on the Stability Testing Framework 110. According to an embodiment, the Stability Testing Framework 110 includes the Interface repository 201 which includes the one or more user interfaces. According to an embodiment, the Stability Testing Framework 110 comprises a cross-domain testing platform 230 and a stress testing platform 232 executed by the processor 109 by invoking one or more user interfaces stored in the interface repository 201. For example, when the execution module 220 is executing the stability testing for a set of test cases in the cross-domain testing platform 230 or the stress testing platform 232, the one or user interfaces may be invoked to test the one or more functional components. The processor 109 may invoke the one or more user interfaces from the Interface repository 201 to be displayed on the display for the set of test cases.

According to an embodiment, the one or more user interfaces comprises at least one of a Tool Access Interface 206, a Domain Scripts Access interface 208, a Network Loading interface 210, an Input/output (I/O) Loading interface 212, and a Connectivity interface 214. According to an embodiment, the process may selectively invoke each of these interfaces in accordance with the set of test cases and the testing platform. The processor 109 may invoke at least one of the user interfaces or a combination of the user interfaces to execute the set of test cases on the cross-domain testing platform 230 or the stress stressing platform to determine the stability of the one or more functional components of the infotainment unit. According to an embodiment, the set of test cases may include a first set of test cases and a second set of test cases to be executed on the cross-domain testing platform 230 and the stress- testing platform. In the cross-domain testing platform 230, the processor 109 may execute the first set of test cases to test an interaction between the one or more functional components for a first predefined time period. In the stress testing platform 232, the processor 109 may execute the second set of test cases to test the one or more functional components under maximum load capacity for the first predefined time-period. The maximum load capacity is indicative of a simulated load on the one or more functional components considering the vehicle in an operating state. According to an embodiment, the processor 109 may selectively invoke one or more user interfaces when executing the first set of test cases in the cross-domain testing platform 230. Further, the processor may selectively invoke the one or more user interfaces when executing the second set of test cases in the stress testing platform 232. For example, when the processor 109 executes the first set of test cases to test the interaction in the cross- domain testing platform the Tool Access Interface 206 and the Domain Scripts Access interface 208 may be invoked. Further, when the processor 109 executes the second set of test cases to test the maximum load capacity at least one of the Network Loading interface 210, the Input/output (I/O) Loading interface 212, and the Connectivity interface 214 may be invoked.

According to an embodiment, the cross-domain testing platform 230 is provided for stability testing the one or more functional components of a plurality of domains in the infotainment unit. The plurality of domains, for example, include entertainment domain, navigation domain, connectivity domain and the like. Unlike manual testing in which each domain is tested independent of the other, the cross-domain testing platform 230 provides a provision to test multiple domains at any instance of time to evaluate the interaction between the one or more functional components belonging to multiple domains. For example, cross-domain testing scenarios include playing a song from the entertainment domain through a functional component such as a speaker, starting a route guidance from the navigation domain through a functional component such as an HMI, receiving calls from the connectivity domain through a functional component such as a microphone. These interaction scenarios may be tested together simultaneously at any instance of time to evaluate the interaction between one or more functional components of the infotainment unit. In this regard, the processor 109 may execute the tests in the cross-domain testing platform 230 to test several interaction scenarios and record the test results. Such a testing platform may be required to avoid malfunctions on the infotainment unit when multiple functional components are operating together in synergy at a specific time. In some examples, the processor 109 may invoke either the Connectivity interface 214, I/O loading interface 212, Tool Access interface 206, Domain Scripts Access Interface 208, or their combination during the cross-domain platform testing.

The stress testing platform 232 is provided for stability testing of the one or more functional components under a maximum load capacity for the first predefined time-period. The maximum load capacity is indicative of a simulated load on the one or more functional components considering the vehicle in an operating state. Unlike manual testing or other automated testing which tests only the basic test scenarios, the stress testing provides a provision to test the one or more functional components of the infotainment unit by maximizing or increase the rate of utilization of the vehicle processing unit. In this regard, the processor 109 may test the infotainment unit up to their boundary line or maximum capacity. For example, stress testing scenarios may replicate a car-like environment in the testing platform by providing the simulated load such as, but not limited to, vehicle speed, start/ stop duration of the vehicle, etc. Further, the simulated load may include load on the network such as, but not limited to, CAN bus network, Ethernet bus network, LIN network or other in-vehicle networks. Furthermore, the simulated load may include load on the connectivity modules, such as, but not limited to, smart phone connectivity via Bluetooth, Wi-Fi or other wireless communication. In an example, a typical stress testing scenario may include the car running at a specified speed with multiple intermediate stop destinations with a plurality of smart phones with full memory trying to establish a wireless connection with the infotainment unit. In addition, playing a song from the connected smart phones. Such a stress scenario may be provided on the stress testing platform 232 to evaluate the performance of the infotainment unit under maximum utilization of the vehicle processing unit. In this regard, the processor 109 may execute the tests in the stress testing platform 232 to test several stress scenarios and record the test results. Such a testing platform may be required to avoid crashes on the infotainment unit when multiple functional components are operating together under maximum load capacity in synergy at a specific time. In some examples, the processor 109 may invoke either the Connectivity interface 214, I/O loading interface 212, Network Loading interface 210 or their combination during the stress platform testing.

The stability test framework further includes an aging test platform 234. The processor 109 selectively executes at least one of the first set of test cases and the second set of test cases to test the one or more functional components for a second predefined time-period. Unlike test execution on cross-domain testing platform 230 and the stress testing platform 232 for a short duration, the test execution on the aging test platform 234 is performed for a long duration. For example, the second predefined time-period for running the aging test may be greater than the first predefined time period for running the cross-domain and stress test. In this regard, the cross-domain testing and the stress testing may be classified as short duration testing and the aging testing may be classified as long-duration testing. As discussed previously, the choice of short duration testing and the long duration testing may be specified in the test build communicated by the second computing device 102. According to an embodiment, the processor 109 may execute the long duration testing and the short duration testing for the set of test cases by invoking a plurality of user interfaces from the interface repository 201. According to an embodiment, the first set of test cases include at least one of HMI test, connectivity test, speech test, navigation test, other cross domain tests and their combination. According to an embodiment, the second set of test cases include at least one of vehicle speed test, vehicle processing unit utilization test, networking test, connectivity test other load capacity tests and their combination. According to an embodiment, the test cases may be specified as a part of the test set and the build communicated by the second computing device 102. Accordingly, the processor 109 may process the test cases with its associated conditions in the OEM's repository 202, 204 to generate the Stability Testing Framework 110 and execute the test cases based on the Stability Testing Framework 110 by invoking one or more user interfaces to evaluate the functionalities of the infotainment unit.

The processor 109 generates a plurality of test reports indicating a status of the one or more functional components during the stability testing. For example, the test reports may indicate pass or fail for each test cases on each testing platforms. The processor 109 dynamically updates the database 224 with a plurality of defects encountered during the stability testing. For example, the plurality of defects may be a crash, an image mismatch, a blank HMI, a flickering HMI, system lag, etc. Further, the processor 109 dynamically updates the Stability Testing Framework 110 based on the plurality of defects. the processor 109 modifies the execution of test scripts while testing the test cases on the testing platform based on the feedback of the defects encountered at the infotainment workstation 104.

Below are some of non-limiting examples of functional components which can be tested using the following user interfaces:
Tool Access interface - e.g., record and play feature, random key press feature.
Domain Scripts Access interface - e.g., HMI, speech recognition, navigation.
Network loading interface - e.g., CAN bus load, Ethernet bus load, LIN bus load.
Input/output (I/O) loading interface - e.g., USB, speaker.
Connectivity interface - e.g., Bluetooth, Wi-Fi.

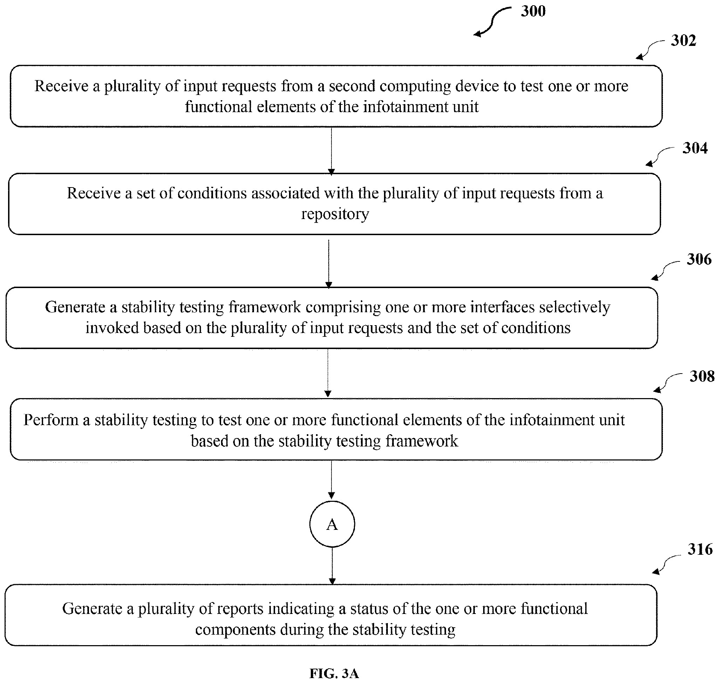

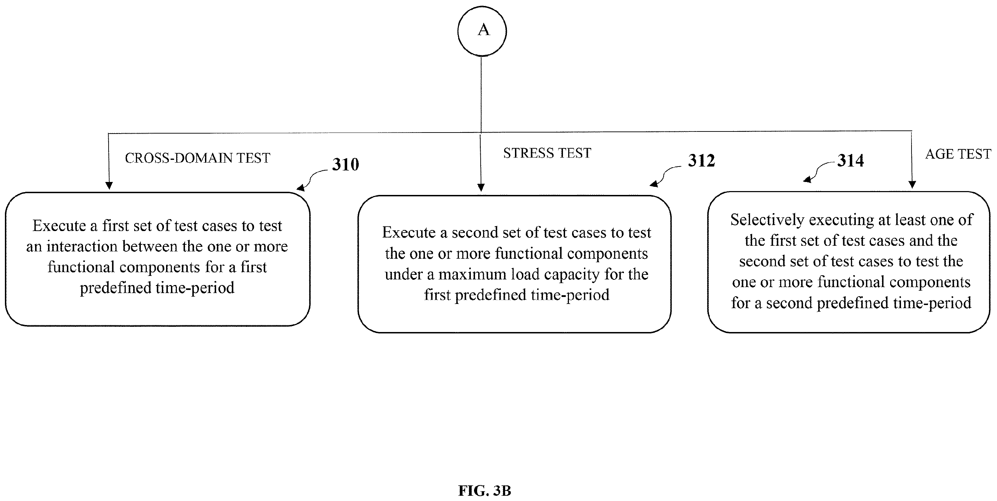

FIGS. 3A and 3B illustrates a flowchart of a method of testing the infotainment unit, in accordance with an embodiment of the present disclosure. As illustrated in Figure 3, the method 300 includes one or more blocks illustrating a method for testing an infotainment unit 104. The method 300 may be described in the general context of computer executable instructions. Generally, computer executable instructions may include routines, programs, objects, components, data structures, procedures, modules, and functions, which perform specific functions or implement specific abstract data types. The order in which the method 300 is described is not intended to be construed as a limitation, and any number of the described method blocks may be combined in any order to implement the method. Additionally, individual blocks may be deleted from the method.

According to an embodiment, a first computing device, a second computing device and an infotainment workstation may be communicably coupled to teach other via a communication channel.

Each of the computing device may include a processor, memory, a database, and a display communicably coupled to each other. Each of the computing device may send and receive input/output (I/O) signals to and from the infotainment workstation. The infotainment workstation includes an infotainment unit, which includes one or more functional components to be tested before deployment in a vehicle.

According to an embodiment, the processor of the first computing device executes testing scripts to test the one or more functional components of the infotainment unit. At step 302, the processor receives a plurality of input requests from the second computing device to test one or more functional elements of the infotainment unit. In some examples, the plurality of input requests may be a software build and a test set communicated by the second computing device, which may be indicative of a new build or an updated build of the infotainment unit which may be unique to each Original Equipment Manufacturers (OEM). In some examples, the software build may also be referred to as a test build which includes the test that would be run on each new build of the infotainment unit supplied by the OEM. In some examples, the second computing device may receive configuration files of the first computing device to verify if the test build is testable by the first computing device. The first computing device may receive the build and the test set after the configuration files of the first computing device is verified. For example, each build may include a build name and a frequency of testing required for the build such a test hourly, test weekly, etc.

At step 304, the processor receives a set of conditions associated with the plurality of input requests from a repository. The set of conditions include a domain script condition and a tool access condition, wherein each of the conditions include associated reference variables such as reference recordings, images, messages, text, provision files and the like. In some examples, the repository may include either an OEM's wise Automation Repository or an OEM's wise Reference Repository or both. For example, if the build specifies to test the functionality of a radio component in the infotainment unit, then the OEM's wise Automation Repository may specify the set of conditions that the radio component testing must include manual search function, auto search function, settings function, and save radio station function. Correspondingly, the OEM's wise Reference Repository may specify an associated reference image required to be displayed while testing the radio component. In another example, if the build specifies to test the functionality of a navigation component in the infotainment unit, then the OEM's wise Automation Repository may specify a condition that the navigation component testing must include direction, from location, to location, etc. Correspondingly, the OEM's wise Reference Repository may specify an associated reference image to be displayed such as a map and a recording to be played such as an audio instruction while testing the navigation component. For example, the "record and play" allow the driver to press a radio button or a soft button in a touch interface to record an activity of the driver. The activity is logged and played back when required for the testing. The replay recordings for the "record and play tool" may be available at the OEM's wise Reference Repository.

At step 306, the processor generates a stability testing framework comprising one or more interfaces selectively invoked based on the plurality of input requests and the set of conditions. The one or more interfaces include a Tool Access interface, a Domain Scripts Access interface, a Network Loading interface, an Input/output (I/O) Loading interface, and a Connectivity interface. At step 308, the processor performs a stability testing to test one or more functional elements of the infotainment unit based on the stability testing framework. The stability testing framework comprises a cross-domain testing platform, a stress testing platform and an aging testing platform. In the cross-domain testing platform, at step 310, the processor executes a first set of test cases to test an interaction between the one or more functional components for a first predefined time-period. For example, cross-domain testing scenarios include playing a song from the entertainment domain through a functional component such as a speaker, starting a route guidance from the navigation domain through a functional component such as an HMI, receiving calls from the connectivity domain through a functional component such as a microphone. These interaction scenarios may be tested together simultaneously at any instance of time to evaluate the interaction between one or more functional components of the infotainment unit. In this regard, the processor may execute the tests in the cross-domain testing platform to test several interaction scenarios and record the test results. Such a testing platform may be required to avoid malfunctions on the infotainment unit when multiple functional components are operating together in synergy at a specific time. In some examples, the processor may invoke one or more user interfaces such as the Connectivity interface, the I/O loading interface, the Tools Access interface, the Domain Scripts Interface or their combination during the cross-domain platform testing.

In the stress testing platform, at step 312, the processor executes a second set of test cases to test the one or more functional components under a maximum load capacity for the first predefined time-period. For example, stress testing scenarios may replicate a car-like environment in the testing platform by providing the simulated load such as, but not limited to, vehicle speed, start/ stop duration of the vehicle, etc. Further, the simulated load may include load on the network such as, but not limited to, CAN bus network, Ethernet bus network, LIN network or other in-vehicle networks. Furthermore, the simulated load may include load on the connectivity modules, such as, but not limited to, smart phone connectivity via Bluetooth, Wi-Fi or other wireless communication. In an example, a typical stress testing scenario may include the car running at a specified speed with multiple intermediate stop destinations with a plurality of smart phones with full memory trying to establish a wireless connection with the infotainment unit. In addition, playing a song from the connected smart phones. Such a stress scenario may be provided on the stress testing platform to evaluate the performance of the infotainment unit under maximum utilization of the vehicle processing unit. In this regard, the processor may execute the tests in the stress testing platform to test several stress scenarios and record the test results. Such a testing platform may be required to avoid crashes on the infotainment unit when multiple functional components are operating together under maximum load capacity in synergy at a specific time. In some examples, the processor may invoke either the Connectivity interface, I/O loading interface, Network loading interface or their combination during the stress platform testing.

In the aging testing platform, at step 314, the processor selectively executes at least one of the first set of test cases and the second set of test cases to test the one or more functional components for a second predefined time-period. The first predefined time-period is shorter than the second predefined time-period. For example, due to use of a functional component for a long period of time, the functional component may tend to fail, or may eventually stop functioning. Therefore, the aging testing platform tests the stability of the function components by testing their functionalities continuously for second predefined time-period. For example, the processor may execute a test case test the performance of the Bluetooth component of the infotainment unit 104 after the second predefined time-period, for instance, a month or a year.

At step 316, the processor generates a plurality of reports indicating a status of the one or more functional components during the stability testing. The plurality of reports may be stored in a database in the form of test reports which indicates the status of the one or more functional components while executing the test cases. According to the invention, the processor dynamically updates the database with a plurality of defects encountered during the stability testing. Further, the processor dynamically updates the stability testing framework based on the plurality of defects. For example, the plurality of defects may be a crash, an image mismatch, a blank HMI, a flickering HMI, system lag, etc. Further, the processor may dynamically update the stability testing framework based on the plurality of defects. The processor modifies the execution of test scripts while testing the test cases on the testing platform based on the feedback of the defects encountered at the infotainment workstation.

The foregoing method descriptions and the process flow diagrams are provided merely as illustrative examples and are not intended to require or imply that the steps of the various embodiments must be performed in the order presented. As will be appreciated by one of skill in the art the order of steps in the foregoing embodiments may be performed in any order. Words such as "thereafter," "then," "next," etc. are not intended to limit the order of the steps; these words are simply used to guide the reader through the description of the methods. Further, any reference to claim elements in the singular, for example, using the articles "a," "an" or "the" is not to be construed as limiting the element to the singular.

FIG. 4 illustrates a sequence flow of the short duration stability testing, in accordance with an embodiment of the present disclosure. As shown in FIG. 4, the sequence flow begins with a client 101 trying to establish a connection with an OEM server 102 for testing the infotainment unit. The connection may be established via a communication channel. The connection request may include information such as a test bench name (i.e., infotainment workstation name) or current build ID available on the client 101. The OEM server 102 accepts the connection and sends one or more input requests indicative of the test set and the software build that requires testing. In some examples, the OEM server 102 checks the capabilities of the test bench 104 such whether a camera provision, GPS, online connectivity, etc. is available. In scenarios, when such capabilities are not available at the test bench, the OEM server 102 may update a configuration file according to the capabilities of the test bench 104. In some examples, the OEM server 102 accepts the connection and sends the updated configuration file indicating that a legacy configuration file at the client is no longer valid for performing the test set of the software build. The client 101 may read the updated configuration file and start the test execution on the stability framework by invoking the interfaces such as the I/O loading interface, Connectivity interface, Network loading interface, Tool Access interface and a Domain Scripts Access interface or their combination to perform the stability testing. The client 101 may run the test scripts or tools required for executing the test on the one or more functional components on the test bench. Further, the client 101 may capture a feedback information during the stability testing by recording the images and other data sent by the test bench 104. In some examples, these images may be indicative of live images from the head unit which may be compared with reference images at the client to verify if the test is running successfully or if there exists an error. Further, the client 101 may update a database 106, 224 with the test results during the stability testing. The database 106, 224 may be available at the OEM server 102 or the client 101. The database 106, 224 may be accessible by both the OEM server 102 and the client 101. The client 101 may generate a test report indicating the test results for the test set provided by the OEM server 102. The test report may include the status of the one or more functional components during the stability testing using the cross-domain testing platform, stress testing platform and aging testing platform.

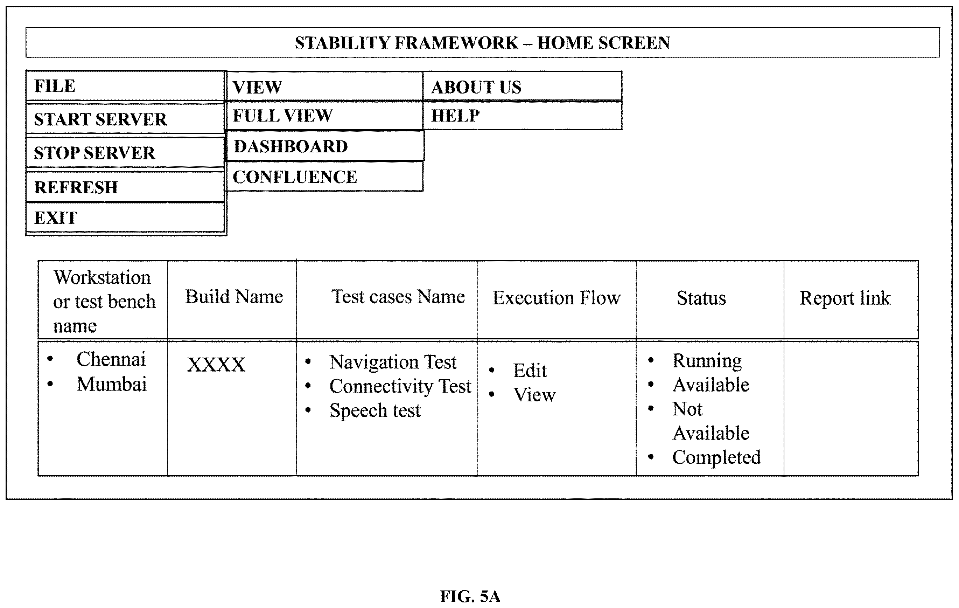

FIGS. 5A-5F illustrates an example of the user interfaces as mentioned above provided with the options to test the stability of the one or more functional components, in accordance with an embodiment of the present disclosure.

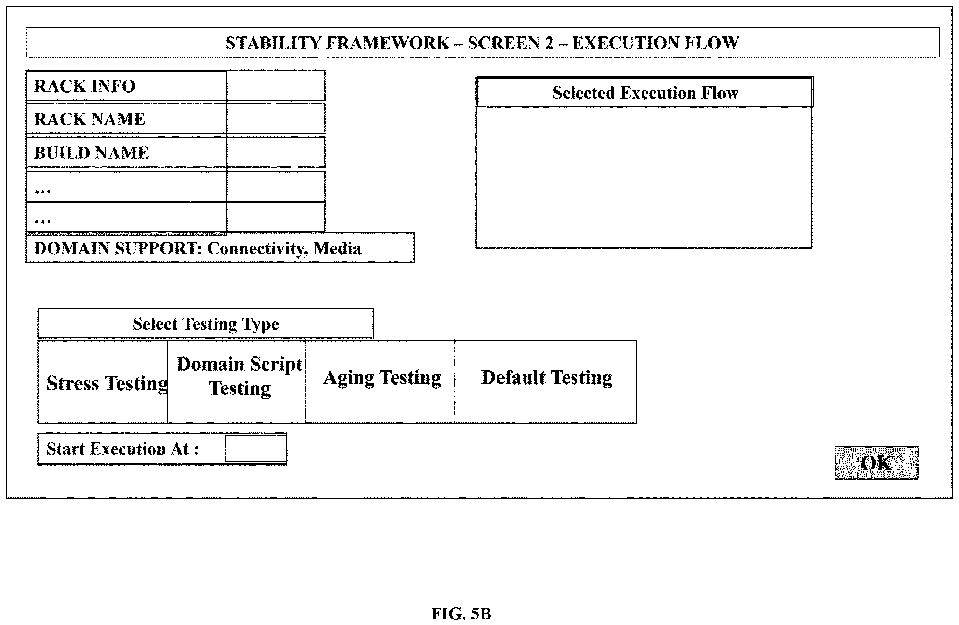

FIG. 5A illustrates a home screen of the stability framework. The home screen provides configuration information such as infotainment workstation/test bench name, build name, test case name, execution flow, status, and report link. In some examples, the client 101 may connect with the server 102 using the home screen to exchange the configuration information. In some examples, the server may communicate the build name and the test case name. For example, the test case name may be speech test, navigation test and connectivity test. For example, the status indicates the availability of the infotainment workstation/test bench. The status may be either running, available, not available, completed and so on. The execution flow option is pressed to list the available testing platforms in the stability testing framework 110. For example, the list may include Domain script testing platform, stress testing platform, aging testing platform and the default testing platform as shown in FIG. 5B.

FIG. 5B illustrates an execution flow screen which may be the second screen of the stability testing framework 110. As previously discussed, the execution flow screen provided a list of options for the testing of the test cases. As shown in FIG. 5B, the options are Domain script testing platform, stress testing platform, aging testing platform and the default testing platform. Further, the execution flow screen may include other information such as rack info., rack name, build name, domains supported by the client 101. The rack name or rack info. May be indicative of the information of the infotainment workstation/test bench. One of the testing platforms may be selected based on the test cases and the supporting domains. The selection may appear in the "selected execution flow" dialog box.

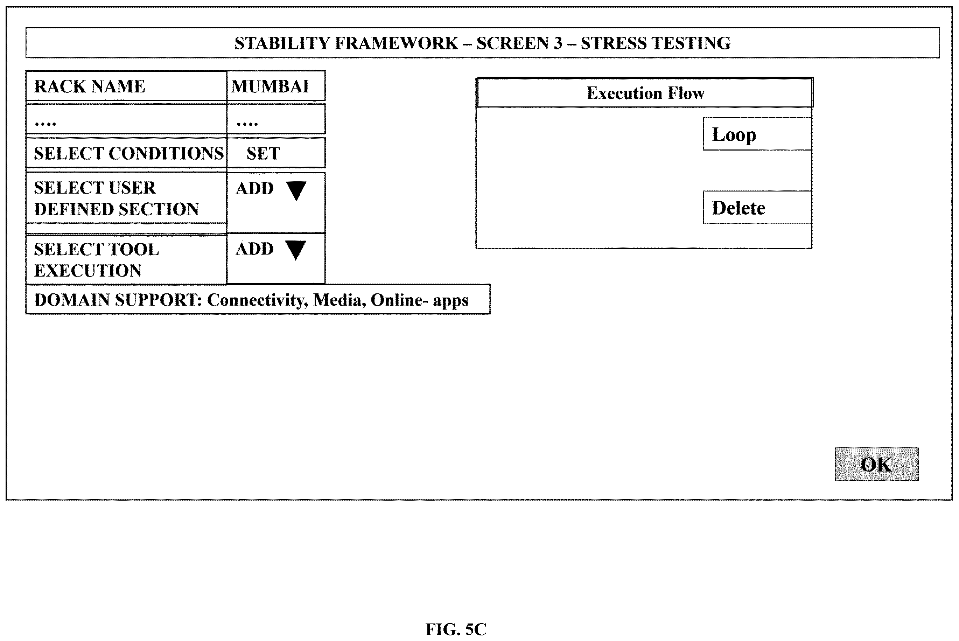

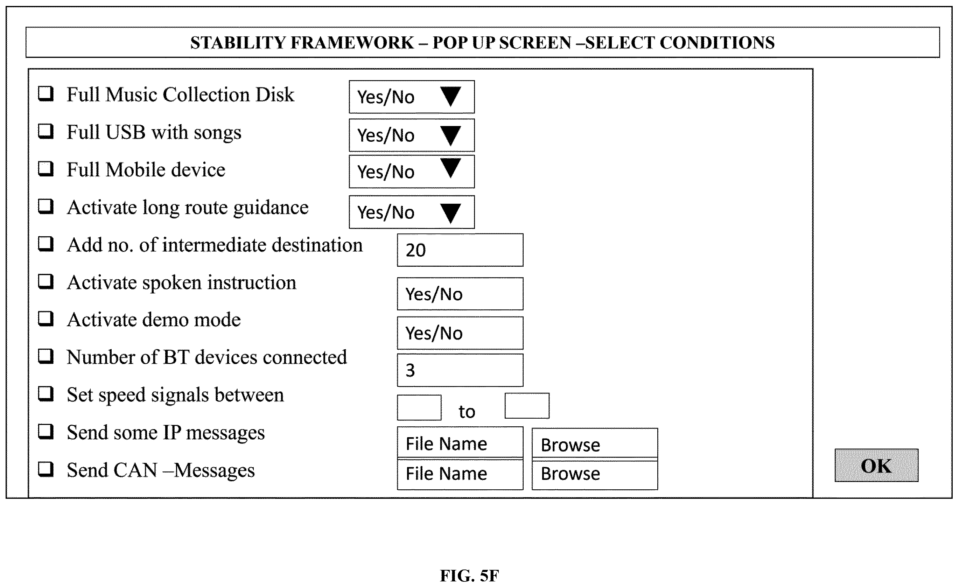

FIG. 5C illustrates a stress testing which may be the third screen of the stability testing framework 110 according to the selection in the execution flow screen. The stress testing screen provides one or more options to execute the test cases. As shown in FIG. 5C, the one or more options may include "select condition", "select user defined condition", "select tool execution". For example, if the "select condition" option is selected, a pop-up window may be triggered listing a set of conditions as shown in FIG. 5F. These conditions may be OEM specific conditions fetched from the OEM repositories or may be user defined for each for the stress testing platform. For example, the if the OEM repository specifies that only 7 Bluetooth (BT) devices can be connected to the infotainment unit, the accordingly a number less than 7 may be input on the user interface to test the stability. As shown in FIG. 5F, the set of conditions are provided to increase a load on the infotainment unit, test it to its maximum capacity, and evaluate the performance. For example, network related load, connectivity related load, and I/O related load appears to be specified in the pop-up window to stress test the infotainment unit. In addition, the stress testing screen provides the "select user defined condition" in which other scenarios such as, but not limited to, music on/off, Bluetooth on/off, Wi-Fi on/off, open/close navigation, play/pause song, connect/disconnect call, and other like scenarios may be selected. Further, the "select tool execution" provides a provision to select the "record and play", "random key press", "advanced money testing" and other like features under tool execution. A combination of these conditions may be provided on the stress testing platform to test the infotainment to its full capacity. In some examples, the cross-domain testing may also be executed in the stress testing screen as it provides additional options such as the "select user defined condition" and "select tool execution".

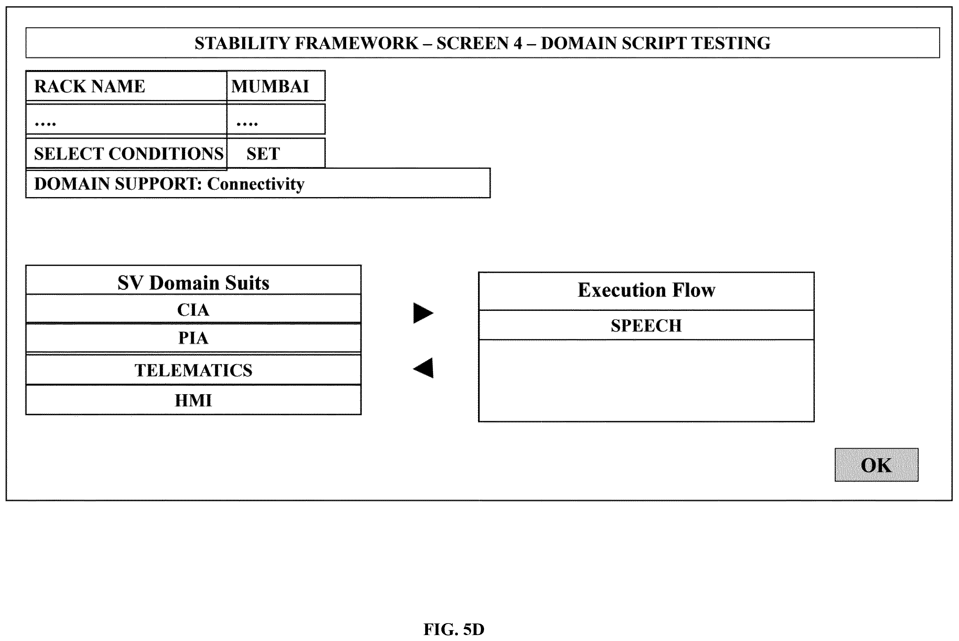

FIG. 5D illustrates a domain script testing platform interface in which multiple domains along with the set of conditions as shown in FIG. 5F may be selected to test the infotainment unit. For example, under the "Standard Validation (SV) domain suits" when "HMI" domain is selected, then test scripts related to HMI domain is executed and displayed in the execution flow dialog box. Further, when there is a requirement to add additional scenarios, one or more conditions may be selected from the pop-up window along with the domain related conditions such as the "HMI".

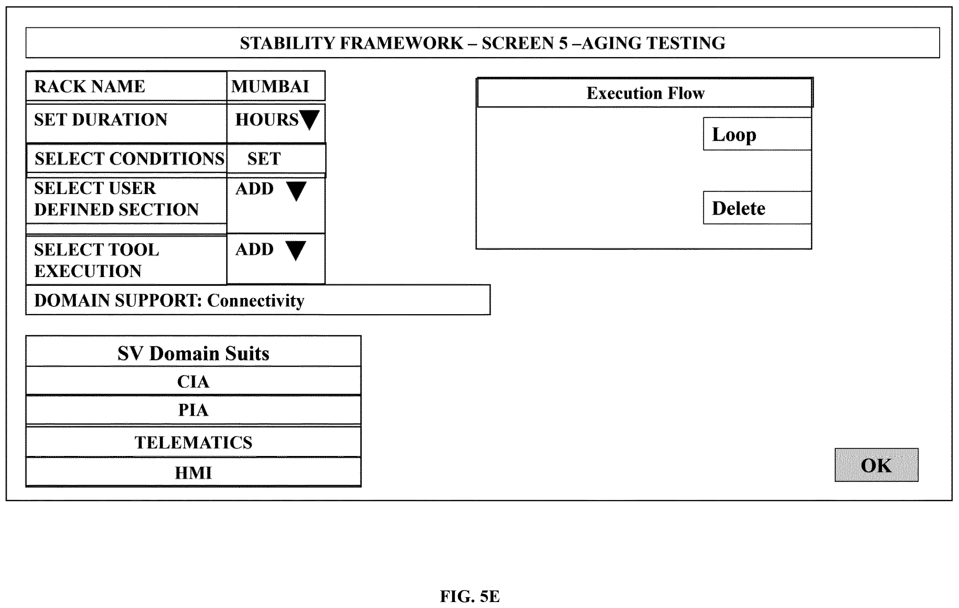

FIG. 5E illustrates an aging testing platform interface which appears to contain the options of both the stress testing platform interface and the domain script testing platform interface. For example, the aging testing platform interface includes options such as the "select condition", the "select user defined condition", the "select tool execution" and the "Standard Validation (SV) domain suits". In addition, as shown in FIG. 5E, it is possible in the aging testing platform to test the infotainment for a prolonged time-period by setting the duration of test execution in hours. For example, if the test execution is complete before the duration set in the aging testing interface, then the result of the execution may be analyzed such that the failed test cases may be looped again for the testing until the expiry of the set duration. In this regard, the infotainment unit may be tested using test scripts invoked via the one or more user interfaces of the stability testing framework.

In some example embodiments, certain ones of the operations herein may be modified or further amplified as described below. Moreover, in some embodiments additional optional operations may also be included. It should be appreciated that each of the modifications, optional additions or amplifications described herein may be included with the operations herein either alone or in combination with any others among the features described herein.

The hardware used to implement the various illustrative logics, logical blocks, modules, and circuits described in connection with the aspects disclosed herein may include a general purpose processor, a digital signal processor (DSP), a special-purpose processor such as an application specific integrated circuit (ASIC) or a field programmable gate array (FPGA), a programmable logic device, discrete gate or transistor logic, discrete hardware components, or any combination thereof designed to perform the functions described herein. A general-purpose processor may be a microprocessor, but, in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration. Alternatively or additionally, some steps or methods may be performed by circuitry that is specific to a given function. In one or more example embodiments, the functions described herein may be implemented by special-purpose hardware or a combination of hardware programmed by firmware or other software. In implementations relying on firmware or other software, the functions may be performed as a result of execution of one or more instructions stored on one or more non-transitory computer-readable media and/or one or more non-transitory processor-readable media. These instructions may be embodied by one or more processor-executable software modules that reside on the one or more non-transitory computer-readable or processor-readable storage media. Non-transitory computer-readable or processor-readable storage media may in this regard comprise any storage media that may be accessed by a computer or a processor. By way of example but not limitation, such non-transitory computer-readable or processor-readable media may include random access memory (RAM), read-only memory (ROM), electrically erasable programmable read-only memory (EEPROM), FLASH memory, disk storage, magnetic storage devices, or the like. Disk storage, as used herein, includes compact disc (CD), laser disc, optical disc, digital versatile disc (DVD), floppy disk, and Blu-ray disc^{™}, or other storage devices that store data magnetically or optically with lasers. Combinations of the above types of media are also included within the scope of the terms non-transitory computer-readable and processor-readable media. Additionally, any combination of instructions stored on the one or more non-transitory processor-readable or computer-readable media may be referred to herein as a computer program product.

Many modifications and other embodiments of the inventions set forth herein will come to mind to one skilled in the art to which these inventions pertain having the benefit of teachings presented in the foregoing descriptions and the associated drawings. Although the figures only show certain components of the apparatus and systems described herein, it is understood that various other components may be used in conjunction with the supply management system. Therefore, it is to be understood that the inventions are not to be limited to the specific embodiments disclosed and that modifications and other embodiments are intended to be included within the scope of the appended claims. Moreover, the steps in the method described above may not necessarily occur in the order depicted in the accompanying diagrams, and in some cases one or more of the steps depicted may occur substantially simultaneously, or additional steps may be involved. Although specific terms are employed herein, they are used in a generic and descriptive sense only and not for purposes of limitation.

The various illustrative logical blocks, modules, circuits, and algorithm steps described in connection with the embodiments disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention.

## Claims

1. A method (300) of testing an infotainment unit of a vehicle, the method comprising:
receiving (302), by a processor (109) of a first computing device (101), a plurality of input requests from a second computing device (102) to test one or more functional components of the infotainment unit, wherein the one or more functional components are positioned on an infotainment workstation (104), wherein the processor (109) is communicably coupled to the infotainment workstation (104);
receiving (304), by the processor (109), a set of conditions associated with the plurality of input requests from a repository of the first computing device (101);
generating (306), by the processor (109), a stability testing framework (110) comprising one or more interfaces selectively invoked based on the plurality of input requests and the set of conditions;
performing (308), by the processor (109), a stability testing to test the one or more functional components of the infotainment unit based on the stability testing framework (110), wherein the stability testing framework (110) comprises a cross-domain testing platform (230), a stress testing platform (232) and an aging testing platform (234),
wherein in the cross-domain testing platform (230),
executing (310), by the processor (109), a first set of test cases to test an interaction between the one or more functional components for a first predefined time-period;
wherein in the stress testing platform (232),
executing (312), by the processor (109), a second set of test cases to test the one or more functional components under a maximum load capacity for the first predefined time-period, wherein the maximum load capacity is indicative of a simulated load on the one or more functional components considering the vehicle in an operating state;
wherein in the aging testing platform (234),
selectively executing (314), by the processor (109), at least one of the first set of test cases and the second set of test cases to test the one or more functional components for a second predefined time-period; and
generating (316), by the processor (109), a plurality of reports indicating a status of the one or more functional components during the stability testing,
wherein generating the plurality of reports further comprises:
dynamically updating a database (106, 224) with a plurality of defects encountered during the stability testing; and
dynamically updating the stability testing framework (110) based on the plurality of defects, wherein the updating of the stability testing framework comprises modifying the execution of test scripts while testing based on a feedback of the plurality of defects.

2. The method of claim 1, wherein the one or more functional components comprises at least one of Head-Unit; Heads-Up Display; Operating Systems; Bus communication protocols such as media oriented systems transport, MOST, controller area network, CAN, local interconnect network, LIN, Flexray, Ethernet and other communication protocols; Connectivity Modules such as Bluetooth, Wi-Fi and other wireless communications; Instrument Clusters such as analog and digital gauges; steering wheel controls; and other types of embedded Electronic Control Unit, ECU, or their combination.

3. The method of claim 1, wherein the one or more interfaces comprises a Tool Access interface (206), a Domain Scripts Access interface (208), a Network Loading interface (210), an Input/output, I/O, Loading interface (212), and a Connectivity interface (214).

4. The method of claim 3, wherein executing the first set of test cases to test the interaction further comprises: invoking at least one of the Tool Access interface (206) and a Domain Scripts Access interface (208).

5. The method of claim 3, wherein executing the second set of test cases to test the maximum load capacity further comprises: invoking at least one of the Network Loading interface (210), the Input/output, I/O, Loading interface (212), and the Connectivity interface (214).

6. The method of claim 1, wherein the first predefined time-period is shorter than the second predefined time-period.

7. The method of claim 1, wherein the set of conditions comprises a domain script condition and a tool access condition, wherein each of the conditions include associated reference variables such as reference recordings, images, messages, text, provision files and the like.

8. The method of claim 1, wherein the first set of test cases comprises at least one of HMI test, connectivity test, speech test, navigation test, other cross domain tests and their combination, and wherein the second set of test cases comprises at least one of vehicle speed test, vehicle processing unit utilization test, networking test, other load capacity tests and their combination.

9. A system for testing an infotainment unit comprising:
a processor (109) of a first computing device (101);
a memory (200); and
a display,
wherein the processor (109) is communicably coupled to the memory (200), the display and an infotainment workstation (104), and
wherein the processor (109) is configured to:
receive a plurality of input requests from a second computing device (102) and a set of conditions associated with the plurality of input requests from a repository of the first computing device (101), wherein the plurality of input requests is to test one or more functional components of the infotainment unit, wherein the one or more functional components are positioned at the infotainment workstation (104);
generate a stability testing framework (110) comprising one or more interfaces selectively invoked based on the plurality of input requests and the set of conditions, ,
perform a stability testing to test the one or more functional components of the infotainment unit based on the stability testing framework (110), wherein the stability testing framework (110) comprises a cross-domain testing platform (230), a stress testing platform (232) and an aging testing platform (234),
wherein when performing the stability testing,
invoke one or more user interfaces on the display for a first set of test cases through the cross-domain testing platform (230) and a second set of test cases through the stress testing platform (232), wherein the first set of test cases is to test an interaction between the one or more functional components and the second set of test cases is to test the one or more functional components under maximum load capacity for a first predefined time-period, wherein the maximum load capacity is indicative of a simulated load on the one or more functional components considering the vehicle in an operating state; and
selectively executing at least one of the first set of test cases and the second set of test cases through the aging testing platform (234) to test the one or more functional components for a second predefined time-period, and
generate a plurality of reports indicating a status of the one or more functional components during the stability testing,
wherein the processor (109) is further configured to:
dynamically update a database (106, 224) with a plurality of defects encountered during the stability testing; and
dynamically update the stability testing framework (110) based on the plurality of defects, wherein the updating of the stability testing framework comprises modifying the execution of test scripts while testing based on a feedback of the plurality of defects.

10. The system of claim 9, wherein the processor (109) is further configured to: simultaneously execute the first set of test cases and the second set of test cases during the stability testing.

11. The system of claim 9, wherein the one or more user interfaces comprises at least one of a Tool Access interface (206), a Domain Scripts Access interface (208), a Network Loading interface (210), an Input/output, I/O, Loading interface (212), and a Connectivity interface (214).

12. The system of claim 9, wherein the first set of test cases comprises at least one of HMI test, connectivity test, speech test, navigation test, other cross domain tests and their combination, and wherein the second set of test cases comprises at least one of vehicle speed test, vehicle processing unit utilization test, networking test, other load capacity tests and their combination.

13. The system of claim 9, wherein the one or more functional components comprises at least one of Head-Unit; Heads-Up Display; Operating Systems; Bus communication protocols such as media oriented systems transport, MOST, controller area network, CAN, local interconnect network, LIN, Flexray, Ethernet and other communication protocols; Connectivity Modules such as Bluetooth, Wi-Fi and other wireless communications; Instrument Clusters such as analog and digital gauges; steering wheel controls; and other types of embedded Electronic Control Unit, ECU, or their combination.

## Patentansprüche

1. Verfahren (300) zum Testen einer Infotainment-Einheit eines Fahrzeugs, wobei das Verfahren Folgendes umfasst:
Empfangen (302), durch einen Prozessor (109) einer ersten Rechenvorrichtung (101), einer Vielzahl von Eingabeanforderungen von einer zweiten Rechenvorrichtung (102), um eine oder mehrere Funktionskomponenten der Infotainment-Einheit zu testen, wobei die eine oder die mehreren Funktionskomponenten auf einer Infotainment-Arbeitsstation (104) positioniert sind, wobei der Prozessor (109) kommunikationsfähig mit der Infotainment-Arbeitsstation (104) gekoppelt ist;
Empfangen (304), durch den Prozessor (109), eines Satzes von Bedingungen, die der Vielzahl von Eingabeanforderungen zugeordnet sind, von einem Repository der ersten Rechenvorrichtung (101);
Erzeugen (306), durch den Prozessor (109), eines Stabilitätstestframeworks (110), das eine oder mehrere Schnittstellen umfasst, die selektiv auf der Grundlage der Vielzahl von Eingabeanforderungen und des Satzes von Bedingungen aufgerufen werden;
Durchführen (308), durch den Prozessor (109), einer Stabilitätsprüfung, um die eine oder die mehreren Funktionskomponenten der Infotainment-Einheit auf der Grundlage des Stabilitätstestframeworks (110) zu testen, wobei das Stabilitätstestframework (110) eine domänenübergreifende Testplattform (230), eine Belastungstestplattform (232) und eine Alterungstestplattform (234) umfasst,
wobei in der domänenübergreifenden Testplattform (230),
Ausführen (310), durch den Prozessor (109), eines ersten Satzes von Testfällen, um eine Interaktion zwischen der einen oder den mehreren Funktionskomponenten für eine erste vordefinierte Zeitspanne zu testen;
wobei in der Belastungstestplattform (232),
Ausführen (312), durch den Prozessor (109), eines zweiten Satzes von Testfällen, um die eine oder die mehreren Funktionskomponenten unter einer maximalen Lastkapazität für die erste vordefinierte Zeitspanne zu testen, wobei die maximale Lastkapazität eine simulierte Last auf die eine oder die mehreren Funktionskomponenten angibt, indem das Fahrzeug in einem Betriebszustand betrachtet wird;
wobei in der Alterungstestplattform (234),
selektives Ausführen (314), durch den Prozessor (109), von mindestens einem des ersten Satzes von Testfällen und des zweiten Satzes von Testfällen, um die eine oder die mehreren Funktionskomponenten für eine zweite vordefinierte Zeitspanne zu testen; und
Erzeugen (316), durch den Prozessor (109), einer Vielzahl von Berichten, die einen Status der einen oder der mehreren Funktionskomponenten während der Stabilitätsprüfung angeben,
wobei das Erzeugen der Vielzahl von Berichten ferner Folgendes umfasst:
dynamisches Aktualisieren einer Datenbank (106, 224) mit einer Vielzahl von während der Stabilitätsprüfung aufgetretenen Fehlern; und
dynamisches Aktualisieren des Stabilitätstestframeworks (110) auf der Grundlage der Vielzahl von Fehlern, wobei das Aktualisieren des Stabilitätstestframeworks das Modifizieren der Ausführung von Testskripten während der Prüfung auf der Grundlage einer Rückmeldung der Vielzahl von Fehlern umfasst.

2. Verfahren nach Anspruch 1, wobei die eine oder die mehreren Funktionskomponenten mindestens eines von Head-Unit; Heads-Up-Anzeige; Betriebssystemen; Buskommunikationsprotokollen, wie etwa medienorientiertem Systemtransport, MOST, Controller Area Network, CAN, Local Interconnect Network, LIN, Flexray, Ethernet und anderen Kommunikationsprotokollen; Konnektivitätsmodulen, wie etwa Bluetooth, Wi-Fi und anderen drahtlosen Kommunikationen; Instrumentenclustern, wie etwa analogen und digitalen Messgeräten; Lenkradsteuerungen; und anderen Arten von eingebetteter elektronischer Steuereinheit, ECU, oder deren Kombination umfassen.

3. Verfahren nach Anspruch 1, wobei die eine oder die mehreren Schnittstellen eine Werkzeugzugriffsschnittstelle (206), eine Domänenskriptzugriffsschnittstelle (208), eine Netzwerkladeschnittstelle (210), eine Eingabe/Ausgabe-, E/A-, Ladeschnittstelle (212) und eine Verbindungsschnittstelle (214) umfassen.

4. Verfahren nach Anspruch 3, wobei das Ausführen des ersten Satzes von Testfällen zum Testen der Interaktion ferner Folgendes umfasst: Aufrufen von mindestens einer von der Werkzeugzugriffsschnittstelle (206) und einer Domänenskriptzugriffsschnittstelle (208).

5. Verfahren nach Anspruch 3, wobei das Ausführen des zweiten Satzes von Testfällen zum Testen der maximalen Lastkapazität ferner Folgendes umfasst: Aufrufen von mindestens einem von der Netzwerkladeschnittstelle (210), der Eingabe/Ausgabe-, E/A-, Ladeschnittstelle (212) und der Verbindungsschnittstelle (214).

6. Verfahren nach Anspruch 1, wobei die erste vordefinierte Zeitspanne kürzer als die zweite vordefinierte Zeitspanne ist.

7. Verfahren nach Anspruch 1, wobei der Satz von Bedingungen eine Domänenskriptbedingung und eine Werkzeugzugriffsbedingung umfasst, wobei jede der Bedingungen assoziierte Referenzvariablen wie etwa Referenzaufzeichnungen, Bilder, Nachrichten, Text, Bereitstellungsdateien und dergleichen beinhaltet.

8. Verfahren nach Anspruch 1, wobei der erste Satz von Testfällen mindestens eines von HMI-Test, Konnektivitätstest, Sprachtest, Navigationstest, anderen domänenübergreifenden Tests und deren Kombination umfasst, und wobei der zweite Satz von Testfällen mindestens eines von Fahrzeuggeschwindigkeitstest, Fahrzeugverarbeitungseinheit-Nutzungstest, Vernetzungstest, anderen Lastkapazitätstests und deren Kombination umfasst.

9. System zum Testen einer Infotainment-Einheit, umfassend:
einen Prozessor (109) einer ersten Rechenvorrichtung (101);
einen Speicher (200); und
eine Anzeige;
wobei der Prozessor (109) kommunikationsfähig mit dem Speicher (200), der Anzeige und einer Infotainment-Arbeitsstation (104) verbunden ist, und
wobei der Prozessor (109) zu Folgendem konfiguriert ist:
Empfangen einer Vielzahl von Eingabeanforderungen von einer zweiten Rechenvorrichtung (102) und eines Satzes von Bedingungen, die mit der Vielzahl von Eingabeanforderungen assoziiert sind, von einem Repository der ersten Rechenvorrichtung (101), wobei die Vielzahl von Eingabeanforderungen dazu dient, eine oder mehrere Funktionskomponenten der Infotainment-Einheit zu testen, wobei die eine oder die mehreren Funktionskomponenten auf der Infotainment-Arbeitsstation (104) positioniert sind;
Erzeugen eines Stabilitätstestframeworks (110), das eine oder mehrere Schnittstellen umfasst, die selektiv auf der Grundlage der Vielzahl von Eingabeanforderungen und des Satzes von Bedingungen aufgerufen werden;
Durchführen einer Stabilitätsprüfung, um die eine oder die mehreren Funktionskomponenten der Infotainment-Einheit auf der Grundlage des Stabilitätstestframeworks (110) zu testen, wobei das Stabilitätstestframework (110) eine domänenübergreifende Testplattform (230), eine Belastungstestplattform (232) und eine Alterungstestplattform (234) umfasst,
wobei beim Durchführen der Stabilitätsprüfung,
Aufrufen einer oder mehrerer Benutzerschnittstellen auf der Anzeige für einen ersten Satz von Testfällen durch die domänenübergreifende Testplattform (230) und einen zweiten Satz von Testfällen durch die Belastungstestplattform (232), wobei der erste Satz von Testfällen dazu dient, eine Interaktion zwischen der einen oder den mehreren Funktionskomponenten zu testen, und der zweite Satz von Testfällen dazu dient, die eine oder die mehreren Funktionskomponenten unter maximaler Lastkapazität für eine erste vordefinierte Zeitspanne zu testen, wobei die maximale Lastkapazität eine simulierte Last auf die eine oder die mehreren Funktionskomponenten angibt, indem das Fahrzeug in einem Betriebszustand betrachtet wird; und
selektives Ausführen von mindestens einem des ersten Satzes von Testfällen und des zweiten Satzes von Testfällen durch die Alterungstestplattform (234), um die eine oder die mehreren Funktionskomponenten für eine zweite vordefinierte Zeitspanne zu testen, und
Erzeugen einer Vielzahl von Berichten, die einen Status der einen oder mehreren Funktionskomponenten während der Stabilitätsprüfung angeben,
wobei der Prozessor (109) ferner zu Folgendem konfiguriert ist:
dynamisches Aktualisieren einer Datenbank (106, 224) mit einer Vielzahl von während der Stabilitätsprüfung aufgetretenen Fehlern; und
dynamisches Aktualisieren des Stabilitätstestframeworks (110) auf der Grundlage der Vielzahl von Fehlern, wobei das Aktualisieren des Stabilitätstestframeworks das Modifizieren der Ausführung von Testskripten während der Prüfung auf der Grundlage einer Rückmeldung der Vielzahl von Fehlern umfasst.

10. System nach Anspruch 9, wobei der Prozessor (109) ferner konfiguriert ist zum: gleichzeitigen Ausführen des ersten Satzes von Testfällen und des zweiten Satzes von Testfällen während der Stabilitätsprüfung.

11. System nach Anspruch 9, wobei die eine oder die mehreren Benutzerschnittstellen mindestens eine von einer Werkzeugzugriffsschnittstelle (206), einer Domänenskriptzugriffsschnittstelle (208), einer Netzwerkladeschnittstelle (210), einer Eingabe/Ausgabe-, E/A-, Ladeschnittstelle (212) und einer Verbindungsschnittstelle (214) umfassen.

12. System nach Anspruch 9, wobei der erste Satz von Testfällen mindestens eines von HMI-Test, Konnektivitätstest, Sprachtest, Navigationstest, anderen domänenübergreifenden Tests und deren Kombination umfasst, und wobei der zweite Satz von Testfällen mindestens eines von Fahrzeuggeschwindigkeitstest, Fahrzeugverarbeitungseinheit-Nutzungstest, Vernetzungstest, anderen Lastkapazitätstests und deren Kombination umfasst.

13. System nach Anspruch 9, wobei die eine oder die mehreren Funktionskomponenten mindestens eines von Head-Unit; Heads-Up-Anzeige; Betriebssystemen; Buskommunikationsprotokollen, wie etwa medienorientiertem Systemtransport, MOST, Controller Area Network, CAN, Local Interconnect Network, LIN, Flexray, Ethernet und anderen Kommunikationsprotokollen; Konnektivitätsmodulen, wie etwa Bluetooth, Wi-Fi und anderen drahtlosen Kommunikationen; Instrumentenclustern, wie etwa analogen und digitalen Messgeräten; Lenkradsteuerungen; und anderen Arten von eingebetteter elektronischer Steuereinheit, ECU, oder deren Kombination umfassen.

## Revendications

1. Méthode (300) de test d'une unité d'infodivertissement d'un véhicule, comprenant :
la réception (302), par un processeur (109) d'un premier dispositif informatique (101), d'une pluralité de demandes d'entrée provenant d'un deuxième dispositif informatique (102) pour tester un ou plusieurs composants fonctionnels de l'unité d'infodivertissement, dans laquelle le ou les composants fonctionnels sont positionnés sur un poste de travail d'infodivertissement (104), dans laquelle le processeur (109) est couplé de manière communicable au poste de travail d'infodivertissement (104) ;
la réception (304), par le processeur (109), d'un ensemble de conditions associées à la pluralité de demandes d'entrée provenant d'un référentiel du premier dispositif informatique (101) ;
la génération (306), par le processeur (109), d'un cadre de test de stabilité (110) comprenant une ou plusieurs interfaces appelées de manière sélective en fonction de la pluralité de demandes d'entrée et de l'ensemble de conditions ;
l'exécution (308), par le processeur (109), d'un test de stabilité pour tester un ou plusieurs composants fonctionnels de l'unité d'infodivertissement sur la base du cadre de test de stabilité (110), dans laquelle le cadre de test de stabilité (110) comprend une plate-forme de test interdomaine (230), une plate-forme de test de stress (232) et une plate-forme de test de vieillissement (234),
dans laquelle, dans la plate-forme d'essai interdomaine (230),
l'exécution (310), par le processeur (109), d'un premier ensemble de cas de test pour tester une interaction entre un ou plusieurs composants fonctionnels pendant une première période prédéfinie ;
dans laquelle, dans la plate-forme de test de stress (232),
l'exécution (312), par le processeur (109), d'un deuxième ensemble de cas de test pour tester le ou les composants fonctionnels sous une capacité de charge maximale pendant la première période de temps prédéfinie, la capacité de charge maximale étant indicative d'une charge simulée sur le ou les composants fonctionnels en considérant le véhicule dans un état de fonctionnement ;
dans lequel dans la plate-forme d'essai de vieillissement (234),
l'exécution de manière sélective (314), par le processeur (109), d'au moins l'un du premier ensemble de scénarios de test et du deuxième ensemble de scénarios de test pour tester un ou plusieurs composants fonctionnels pendant une deuxième période prédéfinie ; et
la génération (316), par le processeur (109), d'une pluralité de rapports indiquant l'état d'un ou de plusieurs composants fonctionnels pendant le test de stabilité,
dans laquelle la génération de la pluralité de rapports comprend en outre
la mise à jour dynamique d'une base de données (106, 224) avec une pluralité de défauts rencontrés au cours du test de stabilité ; et
la mise à jour de manière dynamique du cadre de test de stabilité (110) sur la base de la pluralité de défauts, la mise à jour du cadre de test de stabilité consistant à modifier l'exécution des scripts de test pendant le test sur la base d'un retour d'information de la pluralité de défauts.

2. Méthode de la revendication 1, dans laquelle le ou les composants fonctionnels comprennent au moins l'un des éléments suivants : unité de tête ; affichage tête haute ; systèmes d'exploitation ; protocoles de communication de bus tels que le transport de systèmes orientés médias, MOST, le réseau de contrôleurs, CAN, le réseau d'interconnexion local, LIN, Flexray, Ethernet et autres protocoles de communication ; modules de connectivité tels que Bluetooth, Wi-Fi et autres communications sans fil ; groupes d'instruments tels que jauges analogiques et numériques ; commandes au volant ; et autres types d'unités de contrôle électronique (ECU) intégrées, ou leur combinaison.

3. Méthode de la revendication 1, dans laquelle la ou les interfaces comprennent une interface d'accès aux outils (206), une interface d'accès aux scripts de domaine (208), une interface de chargement de réseau (210), une interface de chargement d'entrée/sortie (E/S) (212) et une interface de connectivité (214).

4. Méthode de la revendication 3, dans laquelle l'exécution du premier ensemble de cas de test pour tester l'interaction comprend en outre : l'invocation d'au moins une interface d'accès à l'outil (206) et d'une interface d'accès aux scripts de domaine (208).

5. Méthode de la revendication 3, dans laquelle l'exécution du deuxième ensemble de cas de test pour tester la capacité de charge maximale comprend en outre : l'invocation d'au moins une interface de chargement de réseau (210), l'interface de chargement d'entrée/sortie (212) et l'interface de connectivité (214).

6. Méthode de la revendication 1, dans laquelle la première période prédéfinie est plus courte que la deuxième période prédéfinie.

7. La méthode de la revendication 1, dans laquelle l'ensemble de conditions comprend une condition de script de domaine et une condition d'accès à l'outil, chacune des conditions incluant des variables de référence associées telles que des enregistrements de référence, des images, des messages, du texte, des fichiers de provision, etc.

8. Méthode de la revendication 1, dans laquelle le premier ensemble de cas de test comprend au moins un test de l'IHM, un test de connectivité, un test vocal, un test de navigation, d'autres tests interdomaine et leur combinaison, et dans laquelle le deuxième ensemble de cas de test comprend au moins un test de vitesse du véhicule, un test d'utilisation de l'unité de traitement du véhicule, un test de mise en réseau, d'autres tests de capacité de charge et leur combinaison.

9. Système de test d'une unité d'infodivertissement comprenant :
un processeur (109) d'un premier dispositif informatique (101) ;
une mémoire (200) ; et
un écran d'affichage,
dans laquelle le processeur (109) est couplé de manière communicable à la mémoire (200), à l'écran et à un poste de travail d'infodivertissement (104), et
dans laquelle le processeur (109) est configuré pour :
recevoir une pluralité de demandes d'entrée d'un deuxième dispositif informatique (102) et un ensemble de conditions associées à la pluralité de demandes d'entrée d'un référentiel du premier dispositif informatique (101), la pluralité de demandes d'entrée étant destinée à tester un ou plusieurs composants fonctionnels de l'unité d'infodivertissement, le ou les composants fonctionnels étant positionnés sur le poste de travail d'infodivertissement (104) ;
générer un cadre de test de stabilité (110) comprenant une ou plusieurs interfaces appelées de manière sélective en fonction de la pluralité de demandes d'entrée et de l'ensemble de conditions,
effectuer un test de stabilité pour tester un ou plusieurs composants fonctionnels de l'unité d'infodivertissement sur la base du cadre de test de stabilité (110), dans laquelle le cadre de test de stabilité (110) comprend une plate-forme de test interdomaine (230), une plate-forme de test de contrainte (232) et une plate-forme de test de vieillissement (234),
dans lequel lors de la réalisation du test de stabilité,
invoquer une ou plusieurs interfaces utilisateur sur l'écran pour un premier ensemble de cas de test par l'intermédiaire de la plate-forme de test interdomaine (230) et un deuxième ensemble de cas de test par l'intermédiaire de la plate-forme de test de contrainte (232), le premier ensemble de cas de test étant destiné à tester une interaction entre le ou les composants fonctionnels et le deuxième ensemble de cas de test étant destiné à tester le ou les composants fonctionnels sous une capacité de charge maximale pendant une première période prédéfinie, la capacité de charge maximale étant indicative d'une charge simulée sur le ou les composants fonctionnels en considérant le véhicule dans un état de fonctionnement ; et
exécuter de manière sélective au moins l'un du premier ensemble de cas de test et du deuxième ensemble de cas de test par l'intermédiaire de la plate-forme de test de vieillissement (234) pour tester un ou plusieurs composants fonctionnels pendant une deuxième période de temps prédéfinie, et
générer plusieurs rapports indiquant l'état d'un ou de plusieurs composants fonctionnels au cours du test de stabilité,
dans lequel le processeur (109) est en outre configuré pour :
mettre à jour de manière dynamique une base de données (106, 224) avec une pluralité de défauts rencontrés au cours du test de stabilité ; et
mettre à jour de manière dynamique le cadre de test de stabilité (110) sur la base de la pluralité de défauts, la mise à jour du cadre de test de stabilité consistant à modifier l'exécution des scripts de test pendant le test sur la base d'un retour d'information de la pluralité de défauts.

10. Système de la revendication 9, dans lequel le processeur (109) est en outre configuré pour : exécuter simultanément le premier ensemble de cas de test et le deuxième ensemble de cas de test pendant le test de stabilité.

11. Système de la revendication 9, dans lequel la ou les interfaces utilisateur comprennent au moins une interface d'accès aux outils (206), une interface d'accès aux scripts de domaine (208), une interface de chargement de réseau (210), une interface de chargement d'entrée/sortie (212) et une interface de connectivité (214).

12. Système de la revendication 9, dans lequel le premier ensemble de cas de test comprend au moins un test de l'IHM, un test de connectivité, un test vocal, un test de navigation, d'autres tests interdomaine et leur combinaison, et dans lequel le deuxième ensemble de cas de test comprend au moins un test de vitesse du véhicule, un test d'utilisation de l'unité de traitement du véhicule, un test de mise en réseau, d'autres tests de capacité de charge et leur combinaison.

13. Système de la revendication 9, dans lequel le ou les composants fonctionnels comprennent au moins l'un des éléments suivants : unité de tête ; affichage tête haute ; systèmes d'exploitation ; protocoles de communication de bus tels que le transport de systèmes orientés médias, MOST, le réseau de contrôleurs, CAN, le réseau d'interconnexion local, LIN, Flexray, Ethernet et autres protocoles de communication ; modules de connectivité tels que Bluetooth, Wi-Fi et autres communications sans fil ; groupes d'instruments tels que jauges analogiques et numériques ; commandes au volant ; et autres types d'unités de contrôle électronique (ECU) intégrées, ou leur combinaison.
